# EUROPÄISCHE PATENTSCHRIFT

(11) **EP 3 016 810 B1**
(45) Veröffentlichungstag und Bekanntmachung des Hinweises auf die Patenterteilung: **12.04.2017**
(21) Anmeldenummer: 14707143.5
(22) Anmeldetag: 27.02.2014
(51) Int. Cl.: B60C 23/04

(54) **VERFAHREN ZUR ÜBERWACHUNG EINES LUFTDRUCKS IN WENIGSTENS EINEM REIFEN EINES KRAFTFAHRZEUGS**
METHOD FOR MONITORING AN AIR PRESSURE IN AT LEAST ONE TYRE OF A MOTOR VEHICLE
PROCÉDÉ DE SURVEILLANCE DE LA PRESSION DE GONFLAGE D'AU MOINS UN PNEU DE VÉHICULE AUTOMOBILE

(30) Priorität: 01.07.2013 DE 102013212799
(43) Veröffentlichungstag der Anmeldung: 11.05.2016
(73) Patentinhaber: Volkswagen Aktiengesellschaft, 38440 Wolfsburg (DE)
(72) Erfinder: GIER, Klaus-Jürgen, 38165 Lehre (DE)
(86) Internationale Anmeldenummer: PCT/EP2014/053829
(87) Internationale Veröffentlichungsnummer: WO 2015/000607

(56) Entgegenhaltungen:
- WO-A1-2011/073072
- DE-A1-102004 022 930
- US-A1- 2003 058 090
- US-A1- 2011 205 047

## Beschreibung

Die Erfindung betrifft ein Verfahren zur Überwachung eines Luftdrucks in wenigstens einem Reifen eines Kraftfahrzeugs mit den Merkmalen vom Oberbegriff des Patentanspruchs 1.

Ein Verfahren zur Überwachung eines Luftdrucks in wenigstens einem Reifen eines Kraftfahrzeugs ist beispielsweise aus der DE 10 2008 003 845 A1 bekannt. Dabei werden die von einer Reifen-Messelektronik gemessenen Daten, wie Druck und Temperatur drahtlos an eine zentrale Steuereinheit weitergeleitet. Nach Auswertung der empfangenen Messdaten übermittelt die Steuereinheit entsprechende Informationen bzw. Anweisungen an eine geeignete Anzeigevorrichtung. Es wird auch eine Sprachausgabe oder die Nutzung von Tonsignalen vorgeschlagen.

In der WO 2011/004229 A1 wird ein Reifendruck-Überwachungssystem beschrieben, bei dem in Abhängigkeit eines gemessenen Reifendrucks zur Erzeugung von optischen und/oder akustischen Warnsignalen Fahrtrichtungsanzeiger bzw. eine Warnblinkanlage sowie ein Fahrzeughorn durch eine Steuereinheit angesteuert werden.

Die von einer in den Reifen befindlichen Messelektronik drahtlos übermittelten Messdaten werden in einer bestimmten Sendefrequenz übermittelt, wobei zur Einstellung einer optimalen Sendefrequenz diese in Abhängigkeit eines Grenzwertes der Fahrzeuggeschwindigkeit und der pro Zeit gemessenen Druckänderung von einer niedrigen zu einer hohen Sendefrequenz gewechselt wird.

Die nach dem oben genannten Stand der Technik bekannten Verfahren bzw. Vorrichtungen setzen eine eingeschaltete Zündung des Kraftfahrzeugs voraus.

Dies bedingt jedoch, dass ein Fahrzeugführer beim eventuell notwendigen Korrigieren des Reifenfülldrucks an Tankstellen oder dergleichen den Zündschlüssel während seiner Servicearbeiten im Kraftfahrzeug belassen muss.

Durch eine solche Situation ist das Kraftfahrzeug während der Arbeiten des Fahrzeugsführers einer erhöhten Diebstahlgefahr ausgesetzt. Außerdem führt eine eingeschaltete Zündung dazu, dass eingeschaltete Verbraucher, wie z. B. Lüftung, Radio, Beleuchtung und dergleichen weiterhin Strom ziehen und die Batterie belasten.

Aus der US 2003/0058090 A1 sind ein Verfahren sowie ein Kraftfahrzeug mit den Merkmalen vom Oberbegriff des Patentanspruchs 1 sowie des Patentanspruchs 6 bekannt. Konkret ist ein Kraftfahrzeug beschrieben, welches in den Außenspiegeln eine Reifen-Füllanzeige aufweist. Die Reifen-Füllanzeige wird aktiviert, wenn innerhalb einer bestimmten Zeitspanne eine solche Reifendruckänderung erkannt wird, die auf ein manuelles Aufpumpen/Ablassen von Luft in einem Reifen schließen lässt. In diesem Fall sind verschiedenfarbige Anzeigen in den Außenspiegeln aktivierbar, um den Fahrzeugführer darauf hinzuweisen, ob ein Reifen-Fülldruck unterhalb, oberhalb oder innerhalb eines vorgeschriebenen Bereiches liegt.

Der WO 2011/073072 A1 ist eine Vorrichtung zur Überwachung eines Fülldrucks von Reifen zu entnehmen. Diese weist eine Situationserkennungseinheit auf, die eine Situation erkennt, in der ein Anpassen des Füllzustands eines Reifens zu erwarten ist. Eine solche Situation kann beispielsweise beim Halten des Kraftfahrzeugs an einer Tankstelle erkannt werden. Ferner ist ein Füllzustandsanpassungsassistent vorhanden, welcher in einer solchen Situation eine Messung des Reifendrucks mit erhöhter Wiederholfrequenz veranlasst und bei einer Druckänderung auch in einen beschleunigten Funkmodus der Übertragung von Messwerten zur weiteren Verarbeitung wechselt. Es wird unter anderem vorgeschlagen, eine optische Unterstützung zur Anpassung des Reifen-Fülldrucks durch die Fahrtrichtungsanzeiger vorzunehmen.

In der US 2011/0205047 A1 wird eine Vorrichtung offenbart, bei der der Reifen-Fülldruck während eines Befüllvorgangs durch Drucksensoren in den Reifen gemessen, dessen Wert über Funk an eine Auswerteeinheit übertragen und ein Reifen-Fülldruckstatus beispielsweise mittels der Fahrzeugbeleuchtung sichtbar gemacht werden kann.

Schließlich sind der DE 10 2004 022930 A1 ein Verfahren und eine Vorrichtung zur Übermittlung eines Luftdruckzustandes zu entnehmen. Dabei wird von einer radseitigen Vorrichtung eine Radinformation, die einen von einem Luftdrucksensor erfassten Luftdruckzustand enthält, an eine karosserieseitige Vorrichtung gesendet. Hieraus wird ein Luftdruckwert gewonnen. Wenn der Luftdruckwert während der Reifenbefüllung einen Sollwert erreicht, wird eine außen an der Karosserie angeordnete Lampe mit einem ersten Muster in Flackern versetzt. Erreicht der Luftdruck einen über dem Sollwert befindlichen Wert, so wird die Lampe mit einem zweiten Muster in Flackern versetzt.

Der vorliegenden Erfindung liegt die Aufgabe zu Grunde, ein gattungsgemäßes Verfahren mit den Merkmalen vom Oberbegriff des Patentanspruchs 1 derart weiterzubilden, dass einem den Reifendruck korrigierenden Fahrzeugführer leicht nachvollziehbare Mitteilungen gegeben werden, ob sich der Reifendruck bei der Reifendruckkorrektur in die richtige Richtung bewegt bzw. richtig liegt oder nicht.

Die Erfindung löst diese Aufgabe mit den kennzeichnenden Merkmalen von Patentanspruch 1. Vorteilhafte Ausführungen bzw. Weiterbildungen der Erfindung sind den jeweiligen Unteransprüchen entnehmbar.

Die Erfindung geht aus von einem Verfahren zur Überwachung eines Luftdrucks in wenigstens einem Reifen eines Kraftfahrzeugs, wobei durch wenigstens eine im Reifen vorhandene Messelektronik zumindest ein Luftdruck im Reifen erfasst und von der Messelektronik Daten an eine Steuereinheit übertragen werden, wobei die Steuereinheit in Abhängigkeit der Daten Komponenten des Kraftfahrzeugs zur Erzeugung von optischen und/oder akustischen Signalen ansteuert.

Ferner wird die Steuereinheit bei Ausstellen einer Zündung des Kraftfahrzeugs für eine bestimmte Zeitdauer in einen Nachlaufmodus geschaltet, in dem die Steuereinheit weiterhin Daten von der Messelektronik empfangen und in Abhängigkeit der Daten Komponenten des Kraftfahrzeugs zur Erzeugung von optischen und/oder akustischen Signalen ansteuern kann.

Hierdurch wird eine wesentliche Voraussetzung dafür geschaffen, dass der Luftdruck in den Reifen eines Kraftfahrzeugs (zumindest für eine bestimmte Zeitdauer) auch bei abgezogenem Zündschlüssel überwacht und eingestellt werden kann.

Während einer durch einen Fahrzeugführer durchgeführten Reifendruckkontrolle und aktiven Reifendruckänderung kann der Fahrzeugführer somit den Fahrzeugschlüssel abziehen und seinen Arbeiten unbesorgt nachgehen. Überdies werden die zuletzt noch eingeschalteten Verbraucher daran gehindert, die Batterie weiter zu belasten.

Das Verfahren arbeitet derart, dass bei Erreichen oder Überschreiten eines Grenzwertes einer im Reifen in einer bestimmten Zeitspanne erfassten Druckänderung die Messelektronik einen Wechsel im Betriebsmodus durchführt und Daten mit einer gegenüber einem Normalzustand erhöhten Sendefrequenz bzw. in einem gegenüber einem Normalzustand verkürzten Sendeintervall an die Steuereinheit sendet und so die Steuereinheit dazu veranlasst wird, in einen eine aktive Reifendruckänderung unterstützenden Unterstützungsmodus überzugehen und dafür über ein Fahrzeug-eigenes Bussystem die zur Erzeugung von optischen und/oder akustischen Signalen dienenden Komponenten anzusteuern.

Befindet sich die Steuereinheit also im Nachlaufmodus, wird der Wechsel im Betriebsmodus der Messelektronik (erhöhte Sendefrequenz) als Trigger dazu verwendet, um die Steuereinheit überhaupt in einen Unterstützungsmodus zu überführen. Als Unterstützungsmodus wird derjenige Betriebsmodus der Steuereinheit verstanden, der zur optischen und/oder akustischen Unterstützung eines des Reifendruck korrigierenden Fahrzeugführers dient. Es werden dafür insbesondere von außerhalb des Kraftfahrzeugs sichtbare und/oder hörbare Signale erzeugt.

Dabei ist es erfindungsgemäß, wenn von der Steuereinheit im Unterstützungsmodus wenigstens ein Fahrtrichtungsanzeiger angesteuert wird, derart, dass zur Signalisierung einer Aktivierung des Unterstützungsmodus der wenigstens eine Fahrtrichtungsanzeiger zunächst zum Blinken in einer bestimmten Frequenz angesteuert wird und bei Änderung des Druckes die Blinkfrequenz - ausgehend von einer bestimmten Frequenz - mit zunehmender Annäherung an einen Solldruck in eine Richtung verändert (bspw. erhöht) und mit zunehmender Entfernung von dem Solldruck in eine andere Richtung verändert (bspw. gesenkt) wird, wobei bei Erreichen des Solldrucks der wenigstens eine Fahrtrichtungsanzeiger für eine bestimmte Zeitdauer als Dauerlicht angesteuert wird. Auch eine umgekehrte Frequenzänderung, d.h. Senkung der Blinkfrequenz bei Annäherung an den Solldruck und Erhöhung der Blinkfrequenz bei Entfernung von dem Solldruck, ist denkbar.

Auf diese Weise kann dem den Reifendruck korrigierenden Fahrzeugführer eine besonders leicht nachvollziehbare Mitteilung gegeben werden, ob sich der Reifendruck bei der Reifendruckkorrektur in die richtige Richtung bewegt bzw. richtig liegt oder nicht.

Hierbei erscheint es als sehr vorteilhaft, wenn im Unterstützungsmodus von der Steuereinheit ausschließlich in den Rückspiegeln befindliche Fahrtrichtungsanzeiger angesteuert werden. Diese sind besonders gut sichtbar. Außerdem kann hierdurch vermieden werden, dass bei einer Korrektur des Reifendrucks durch den Fahrzeugführer andere Verkehrsteilnehmer irritiert werden, die insbesondere bei Dunkelheit im Fall eines Blinkens der Warnblinkanlage eine Panne oder sogar einen Unfall vermuten.

Eine weitere Ausbildung des Erfindungsgedankens sieht vor, dass bei Über- oder Unterschreiten eines zulässigen Druckbereichs der wenigstens eine Fahrtrichtungsanzeiger zum Blinken in einer solchen Frequenz angesteuert wird, die höher ist als die höchste Frequenz vor Erreichen des Solldrucks.

Auf diese Weise kann die Erzeugung leicht verständlicher Warnsignale optimiert werden.

Nach der allgemeinen Lebenserfahrung wird vom Fahrzeugführer eine Korrektur des Reifenfülldrucks nicht nur an einem Reifen durchgeführt, sondern in der Regel an mehreren Reifen. Um nach einer Reifendruckkorrektur eines Reifens auch genügend Zeit für eine Korrektur der restlichen Reifen zu ermöglichen, verlängert sich nach einer weiteren Ausbildung der Erfindung der Nachlaufmodus jeweils um eine bestimmte Zeitdauer, sobald die Steuereinheit einmal in den Unterstützungsmodus übergegangen ist.

Es erscheint ferner zweckmäßig, wenn die Messelektronik bei Stillstand des Kraftfahrzeugs (also wenn keine Radumdrehung mehr von ihr gemessen wird), spätestens jedoch bei Ausstellen der Zündung des Kraftfahrzeugs für eine bestimmte Zeitdauer in einen solchen Betriebsmodus versetzt wird, in dem ihre Messfrequenz gegenüber einem Normalzustand erhöht ist. Auf diese Weise können gegebenenfalls aktiv durchgeführte Reifendruckänderungen genauer erfasst werden.

Um einen den Reifendruck korrigierenden Fahrzeugführer optimal anzuleiten, kann bei Erreichen des Solldrucks zusätzlich ein bordeigener Summer oder wenigstens ein elektrischer Fensterheber oder eine Türschließung oder wenigstens ein Scheibenwischer oder eine Rückspiegelverstellung oder eine Sprachausgabe, beispielsweise über das Infotainmentsystem, aktiviert werden.

Auf diese Weise können zusätzliche akustische und auch optische Signale unter Nutzung ohnehin vorhandener, bordeigener Mittel erzeugt werden.

Es erscheint noch wichtig zu erwähnen, dass es sehr zweckmäßig sein kann, wenn die erzeugten optischen und/oder akustischen Signale ausschließlich rein qualitativer Natur sind, also keine absoluten Druckwerte angezeigt oder ausgegeben werden. Vielmehr macht es Sinn, es bei reinen qualitativen Angaben oder Signalen, wie beispielsweise "Reifendruck zu niedrig!", "Reifendruck zu hoch!", "Reifendruck korrekt eingestellt!", etc. oder bei der Einstellung einer entsprechenden Blinkfrequenz wenigstens eines Fahrtrichtungsanzeigers zu belassen.

Auf diese Weise ist selbst eine temperaturkompensierte Reifendruckeinstellung ohne Gefahr einer Verwirrung der den Reifendruck korrigierenden Person möglich.

Denn bekanntlich ändert sich der Reifendruck auch mit sich verändernder Betriebstemperatur des Reifens. Bei der Verwendung von üblichen, gegenüber der fahrzeugeigenen Messelektronik meist sehr ungenauen Druckmanometern an Tankstellen, die zudem keine Temperaturkompensation ermöglichen, kann es somit bei einer fahrzeugseitigen Anzeige von absoluten Werten aufgrund von Anzeigeabweichungen beider Anzeigen leicht zu einer Irritation einer den Reifendruck ändernden Person kommen.

Im Fall der Erfindung braucht sich der Fahrzeugführer hierüber keine Gedanken zu machen. Letztendlich zählt für ihn nur die Übermittlung des fahrzeugseitigen Signals, welches bestätigt, dass der korrekte Solldruck (gegebenenfalls unter Berücksichtigung einer vorliegenden Betriebstemperatur) erreicht ist.

Insofern ist der Fahrzeugführer von ungenauen Manometern unabhängig bzw. kann diese gänzlich entbehren.

Die Erfindung betrifft aber auch ein Kraftfahrzeug zur Durchführung des erfindungsgemäßen Verfahrens. Dieses ist derart auszubilden, dass es wenigstens eine in wenigstens einem Reifen vorhandene Messelektronik zur Erfassung zumindest eines Luftdrucks im Reifen und zur Übertragung von Daten der Messelektronik an eine Steuereinheit aufweist, wobei in Abhängigkeit der Daten Komponenten des Kraftfahrzeugs von der Steuereinheit zur Erzeugung von optischen und/oder akustischen Signalen ansteuerbar sind und die Steuereinheit bei Ausstellen einer Zündung des Kraftfahrzeugs für eine bestimmte Zeitdauer in einen Nachlaufmodus schaltbar ist, indem die Steuereinheit von der Messelektronik weiterhin Daten empfangen und in Abhängigkeit der Daten Komponenten des Kraftfahrzeugs zur Erzeugung von optischen und/oder akustischen Signalen ansteuern kann.

Somit wird ein Kraftfahrzeug zur Verfügung gestellt, bei dem durch den Fahrzeugführer eine aktive Reifendruckänderung unter Schonung von Batterieressourcen und unter Vermeidung einer erhöhten Diebstahlgefahr durchgeführt werden kann.

Es soll noch ausdrücklich darauf hingewiesen werden, dass auch der Fahrzeug-Funkschlüssel für ein Verfahren zur Überwachung eines Luftdrucks in wenigstens einem Reifen genutzt werden kann. Der Funkschlüssel ist dann diagnosefähig auszugestalten, das heißt, in ihm sind die notwendigen Diagnosedaten (aktuelle Solldrücke) gespeichert.
Ein sehr elegantes Verfahren zur Überwachung eines Luftdrucks in wenigstens einem Reifen kann nun folgendermaßen funktionieren:
Bei einer relevanten Fülldruckänderung oder bei Unterschreiten einer bestimmten Druckschwelle sendet die Messelektronik zusätzlich einen speziellen Code, der von einer dem Fahrzeug-Funkschlüssel zugeordneten Steuereinheit empfangen und ausgewertet wird.
In einem solchen Fall "weckt" die dem Fahrzeug-Funkschlüssel zugeordnete Steuereinheit die mit der Reifen-Messelektronik kommunizierende Steuereinheit über den Bus auf und versetzt diese für eine bestimmte Zeit in eine Empfangsbereitschaft.
Die Versetzung in eine Empfangsbereitschaft ist bei einem solchen Verfahren also nicht von dem Status der Zündung abhängig, sondern nur vom gemessenen Druckzustand der Reifen. Der Vorteil dieser Lösung liegt darin, dass die Steuereinheit jederzeit in einen eine aktive Reifendruckänderung unterstützenden Unterstützungsmodus übergehen kann und nicht nur im Zeitfenster eines bestimmten Nachlaufmodus nach Ausschalten der Zündung. So kommt die mit der Reifen-Messelektronik kommunizierende Steuereinheit nicht in Konflikt mit bestehenden Ruhestromanforderungen. Vielmehr werden die speziellen Fähigkeiten der mit dem Fahrzeug-Funkschlüssel kommunizierenden Steuereinheit genutzt, bei geringstmöglichem Energieverbrauch Daten über längere Zeiträume empfangen zu können.

Analog zum bereits beschriebenen Blinken der Fahrtrichtungsanzeiger können im Fahrzeug-Funkschlüssel angeordnete Leuchtmittel in Abhängigkeit des jeweiligen Reifen-Fülldrucks zum Blinken in einer veränderlichen Frequenz angesteuert werden.

Der Vorteil bei Verwendung eines Fahrzeug-Funkschlüssels liegt außerdem darin, dass das Verfahren unempfindlicher gegen "Funklöcher" ist und somit eine noch störungsfreiere Funkübertragung der Daten möglich wird. Außerdem wird ein Fahrzeug-Funkschlüssel (im Gegensatz zu anderen denkbaren, separaten Anzeigen, wie z.B. ein Smartphone) verständlicherweise beim Betrieb des Fahrzeugs nicht vergessen.

Schließlich ist auch noch denkbar, einen fahrzeugeigenen Reifenfülldruckkompressor einzusetzen. Ein solcher, in der Regel separat vorgehaltener Kompressor kann an das Bordnetz angeschlossen und über die für den Reifenfülldruck zuständige Steuereinheit angesteuert werden. Denkbar ist dann, dass der Kompressor aktiviert wird, sobald der Istdruck kleiner als der Solldruck ist und der Kompressor in eine Entlüftungsfunktion eintritt, sobald der Istdruck größer als der Solldruck ist. Hierdurch wird eine von einer Bedienperson vollkommen autarke Reifenfülldruck-Korrektur ermöglicht.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein zur Durchführung des erfindungsgemäßen Verfahren ausgebildetes Kraftfahrzeug,
- Fig. 2: ein Diagramm zur Darstellung der Empfangsbereitschaft des Reifendruck-Steuergerätes und einer Messfrequenz der Rad-Messelektronik in Abhängigkeit vom Zündungsstatus,
- Fig. 3: die Abhängigkeit der Blinkfrequenz eines vom Reifendruck-Steuergerät angesteuerten Fahrtrichtungsanzeigers in Abhängigkeit des eingestellten Reifendrucks und
- Fig. 4: die Abhängigkeit der Sendefrequenz einer Rad-Messelektronik von einer pro Zeiteinheit gemessenen Reifendruck-Änderung.

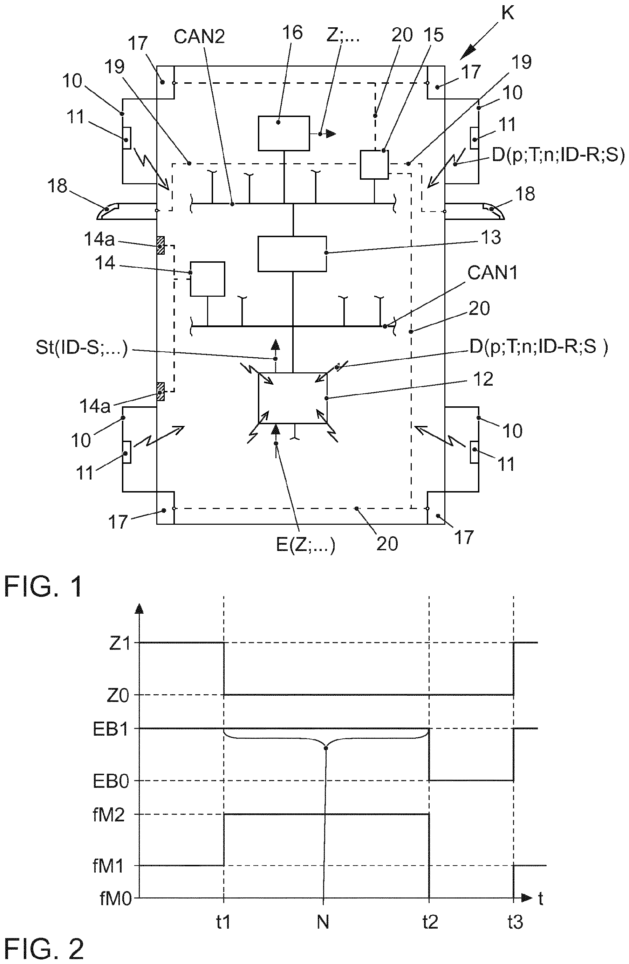

Zunächst wird auf die Fig. 1 Bezug genommen. In dieser Figur ist ein Kraftfahrzeug K dargestellt, welches vier, mit einer Messelektronik 11 ausgestattete Reifen 10 aufweist.

Die Messelektronik 11 ist hinsichtlich Versorgungsspannung von einer Bordnetzspannung des Kraftfahrzeugs K autark und zur Messung eines im Reifen 10 herrschenden Reifendrucks P, einer Reifentemperatur T sowie einer Raddrehzahl N ausgebildet.

Die Messelektronik 11 weist ferner einen nicht näher dargestellten Sender auf, mittels derer Datenpakete D an ein Reifendruckkontroll-Steuergerät (RDK-Steuergerät) 12 drahtlos übermittelt werden kann. Dazu weist das RDK-Steuergerät 12 seinerseits einen nicht näher dargestellten Empfänger auf.

Das RDK-Steuergerät 12 ist Bestandteil eines aus mehreren CAN-Bussen bestehenden Bordnetzes, über das diverse Steuergeräte miteinander vernetzt sind.

Beispielhaft sind zwei CAN-Busse CAN1 und CAN2 angedeutet, welche über ein Gateway 13 miteinander verbunden sind.

Weiterhin vorhandene Subnetze (LIN-Busse) sind nicht dargestellt.

Aus der Figur ist ferner ersichtlich, dass an den CAN-Bus CAN1 ein Steuergerät 14 für Fensterheber 14a sowie das RDK-Steuergerät 12 angeschlossen ist.

Der Übersichtlichkeit halber sind nur die linksseitigen Fensterheber 14a dargestellt.

An den CAN-Bus CAN2 sind unter anderem ein Bordnetz-Steuergerät 16 und ein Steuergerät 15 zur Ansteuerung von in den Scheinwerfern und Leuchten angeordneten Fahrtrichtungsanzeigern 17 sowie zur Ansteuerung von in Außenspiegeln angeordneten Fahrtrichtungsanzeigern 18 angeschlossen.

Dabei dienen Steuerleitungen 19 zur Ansteuerung der Fahrtrichtungsanzeiger 18 und Steuerleitungen 20 zur Ansteuerung der Fahrtrichtungsanzeiger 17.

Bei eingeschalteter Zündung des Kraftfahrzeugs K bzw. im Fahrbetrieb werden über die Messelektroniken 11 der Reifen 10 permanent Datenpakete D an das RDK-Steuergerät 12 gefunkt (vgl. Blitzsymbole). Jedes Datenpaket besteht wenigstens aus Informationen über die Größen p (Reifendruck), T (Reifentemperatur), n (Raddrehzahl), ID-R (Reifen-Identifikation) sowie S (Sendemodus der Messelektronik).

Die gesendeten Datenpakete D werden nun von einer im RDK-Steuergerät 12 befindlichen, nicht näher dargestellten Auswerteeinheit ausgewertet und in Abhängigkeit einer hinterlegten Softwareapplikation gegebenenfalls entsprechende Warnhinweise auf einer geeigneten Anzeige (beispielsweise in einem Kombiinstrument) an einen Fahrzeugführer ausgegeben.

Darin kann der Fahrzeugführer beispielsweise aufgefordert werden, die nächste Tankstelle aufzusuchen und eine entsprechende Reifendruck-Korrektur vorzunehmen.

Nunmehr soll anhand von Fig. 2 ein wesentliches Merkmal des erfindungsgemäßen Verfahrens näher erläutert werden.

In dieser Figur ist ein Zündungsstatus Z über der Zeit t aufgetragen.

In dessen Abhängigkeit ändern sich eine Empfangsbereitschaft EB des RDK-Steuergerätes 12 sowie eine Messfrequenz der Messelektroniken 11, also die pro Zeiteinheit durchgeführte Messung der Größen Reifendruck p, Reifentemperatur T und Raddrehzahl n.

Hält der Fahrzeugführer zur aktiven Veränderung bzw. Korrektur des Reifendrucks an einer geeigneten Lufttankstelle das Kraftfahrzeug K an, so zieht er den Zündschlüssel aus dem Zündschloss heraus, so dass der Zündungsstatus Z von Z1 (Zündung ein) in den Zündungsstatus Z0 (Zündung aus) wechselt. Dies erfolgt zu einem Zeitpunkt t1.

Zum selben Zeitpunkt behält das RDK-Steuergerät 12 jedoch für eine bestimmte Zeitdauer (t2 - t1) seine Empfangsbereitschaft bei (weiterhin EB1). Dieser Zustand, in dem das RDK-Steuergerät 12 weiterhin Datenpakete D von den Messelektroniken 11 empfangen kann, soll als Nachlaufmodus N bezeichnet werden.

Ebenfalls zum Zeitpunkt t1 wird die Messfrequenz der Messelektroniken 11 von einer Messfrequenz fm1 zu einer Messfrequenz fm2 erhöht. Die Dauer der erhöhten Messfrequenz fm2 ist vorzugsweise mit der Zeitdauer des Nachlaufmodus N synchronisiert.

Wird während des Nachlaufmodus N vom Fahrer keine aktive Reifendruckänderung durchgeführt, so wird nach Ende des Nachlaufmodus N (Zeitpunkt t2) die Empfangsbereitschaft des RDK-Steuergerätes 12 auf EBO (keine Empfangsbereitschaft) gesetzt. Auch die Messfrequenz fm wird auf fm=fm0 (OHz, keine Messung) zurückgesetzt.

Erst ein Wiedereinstellen der Zündung (Z = Z1) zu einem späteren Zeitpunkt t3 reaktiviert die Empfangsbereitschaft EB des RDK-Steuergerätes 12 (EB=EB1) sowie eine Messung in den Messelektroniken 11 (fm=fm1).

Wird jedoch vom Fahrzeugführer innerhalb des Nachlaufmodus N an einem der Reifen 10 eine Änderung des Reifendrucks (Ablassen oder Befüllen) vorgenommen, so wird eine solche Druckänderung von der Messelektronik 11 erkannt.

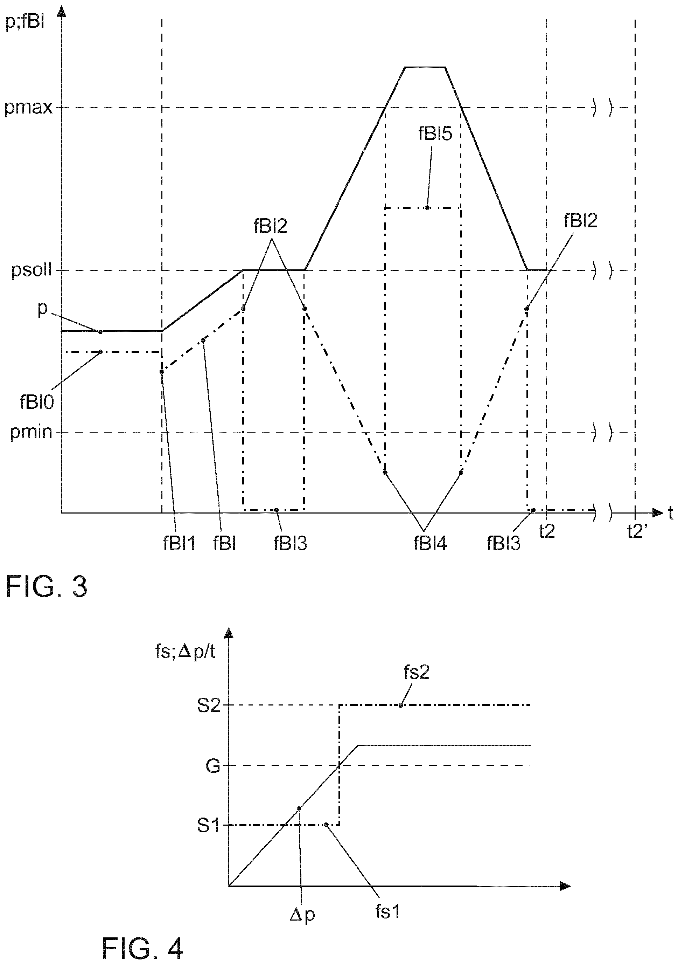

Übersteigt eine Druckänderung Δp pro Zeiteinheit t einen bestimmten Grenzwert G, so wechselt die Messelektronik 11 von einem Sendemodus S1 mit einer ersten Sendefrequenz fS1 zu einem Sendemodus S2 mit einer höheren Sendefrequenz fS2 (vergleiche Fig. 4).

Mit der Sendefrequenz fS2 werden Datenpakete D von der Messelektronik 11 an das RDK-Steuergerät 12 gesendet (vergleiche Fig. 1).

Das RDK-Steuergerät 12 geht nun in einen Modus "Befüllunterstützung" (Unterstützungsmodus) über, wenn folgende Kriterien erfüllt sind:
- die Funktion "Befüllunterstützung" ist vom Fahrzeugführer über die Mensch-Maschine-Schnittstelle (MMS, beispielsweise ein Einstellmenü des Bordcomputers) aktiviert
- die im Datenpaket D übermittelte Drehzahl n ist gleich 0 (Fahrzeug im Stillstand)
- die im Datenpaket D übermittelte Informationseinheit (Datenbit) für den Sendemodus S ist auf S1 (schneller Sendemodus) gesetzt
- das RDK-Steuergerät 12 befindet sich im Nachlaufmodus N

Liegen die genannten Voraussetzungen vor, so wird das RDK-Steuergerät 12 in den Betriebsmodus "Befüllunterstützung" gesetzt. In diesem Modus "weckt" das RDK-Steuergerät 12 den CAN-Bus CAN1 und hat somit Zugriff auf das Steuergerät 14 und über den an das Gateway 13 angeschlossenen CAN-Bus CAN2 auch Zugriff auf das Steuergerät 15.

Es wird vorausgesetzt, dass die Messelektronik 11 der Reifen 10 im RDK-Steuergerät 12 bereits angelernt und richtig zugeordnet ist. Ferner wird vorausgesetzt, dass der Fahrzeugführer über die Mensch-Maschine-Schnittstelle korrekte Werte für verwendete Reifentypen und Solldrücke eingegeben hat.

Anzumerken ist, dass der Zündungsstatus Z zumindest als Bestandteil eines Ausgangssignals des Bordnetz-Steuergerätes 16 dem RDK-Steuergerät 12 zumindest als Bestandteil eines Eingangssignals D zur Verfügung gestellt wird.

Zu bemerken ist ferner, dass trotz eines abgezogenen Zündschlüssels das RDK-Steuergerät 12 und die anzusteuernden Komponenten auf Grund einer direkten Verbindung mit der Bordnetzspannung (über sogenannte Klemme 30) bei Bedarf in einen aktiven Zustand bringbar sind.

Im Ausführungsbeispiel sendet nunmehr das RDK-Steuergerät 12 über das Bussystem (CAN1, 13, CAN2) Steuersignale St aus, die unter anderem eine Steuergeräte-Identifikation ID-S enthalten und somit ein gezieltes Adressieren und Aufwecken der Steuergeräte 14 und/oder 15 ermöglichen.

Im vorliegenden Fall wird das Steuergerät 15 derart angesteuert, dass während der aktiven Reifendruckänderung durch einen Fahrzeugführer lediglich die Außenspiegel-Fahrtrichtungsanzeiger 18 zur Erzeugung einer bestimmten Blinkfrequenz und somit zur visuellen Unterstützung des Fahrzeugführers angesteuert werden.

Dies wird nun anhand von Fig. 3 näher erläutert:
Zur Signalisierung der Systembereitschaft fangen die Fahrtrichtungsanzeiger 18 zunächst an, mit einer "mittleren" Frequenz fbl=fbl0 zu blinken. Anschließend springt die Blinkfrequenz fbl zu einem Punkt fbl1, welcher sich in etwa proportional zur Nähe des vorliegenden Reifendrucks p zu einem Soll-Reifendruck psoll verhält. Ein deutlicher Abstand des Reifendrucks p zu einem Solldruck psoll hat eine niedrige Anfangs-Blinkfrequenz fbl1 zur Folge, ein geringer Abstand zum Solldruck psoll eine hohe Anfangs-Blinkfrequenz fbl1.

Im Ausführungsbeispiel liegt die Anfangs-Blinkfrequenz flb1 etwas unterhalb der Blinkfrequenz fbl0. Ausgehend von der Blinkfrequenz fbl1 wird der Reifendruck p in Richtung des Reifen-Solldrucks psoll erhöht, wodurch sich auch die Blinkfrequenz fbl synchron in Richtung einer höheren Blinkfrequenz fbl2 ändert.

Bei Erreichen des Reifen-Solldruck psoll fällt die Blinkfrequenz fbl schlagartig auf eine Blinkfrequenz fbl3 mit 0 Hertz (Dauerlicht) ab.

Wird, ausgehend vom Solldruck psoll, der Reifendruck p jedoch weiter erhöht, so steigt die Blinkfrequenz fbl schlagartig wieder auf die Blinkfrequenz fbl2 an und fällt mit zunehmender Erhöhung des Reifendrucks p (also mit zunehmender Entfernung vom Solldruck psoll) zu einer niedrigeren Blinkfrequenz fbl4 ab.

Sobald der Reifendruck p über einen maximal zulässigen Reifendruck pmax erhöht wird, springt die Blinkfrequenz fbl schlagartig auf eine solche Blinkfrequenz fbl5 hoch, welche höher liegt als die höchste Frequenz fbl2 vor Erreichung des Solldrucks psoll.

Durch ein solches hochfrequentes Blinken aufmerksam gemacht, wird der Fahrzeugführer den Reifendruck p durch Ablassen von Luft wieder nach unten zu korrigieren versuchen. Bei erneutem Erreichen des maximal zulässigen Reifendrucks pmax wird die Blinkfrequenz fbl wieder auf einen vergleichsweise niedrigen Wert fbl4 abfallen und anschließend mit Annäherung des Reifendrucks p an den Reifen-Solldruck psoll wieder stetig bis zur Blinkfrequenz fbl2 ansteigen und schließlich, mit Erreichen des Solldrucks psoll wiederum auf den Wert fbl3 zurückfallen.

Bei Erreichen des Reifen-Solldrucks psoll geben die Fahrtrichtungsanzeige 18 also ein Dauerlicht ab. Das Dauerlicht erlischt vorzugsweise nach einer Zeitdauer von ein paar Sekunden.

Das Erreichen des Soll-Reifendrucks psoll kann zusätzlich jedoch auch noch durch weitere akustische und/oder optische Signale signalisiert werden. Denkbar ist hier beispielsweise die Ansteuerung eines bordeigenen Summers im Kombiinstrument oder an der Karosserie, eine am Kotflügel montierte LED-"Befüllampel" (rot = großer Abstand vom Solldruck, gelb = wenig Abstand vom Solldruck und grün = Solldruck erreicht).

Des Weiteren ist aber auch denkbar, dass in diesem Fall über das RDK-Steuergerät 12 das Steuergerät 14 und damit die Fensterheber 14a zur Erzeugung einer Bewegung angesteuert werden. Auch ist die Ansteuerung eines Türschlossmoduls zum Erzeugen eines Klackgeräusches oder die Ansteuerung von Scheibenwischern zur kurzzeitigen Erzeugung einer deutlich sichtbaren Bewegung denkbar. Ferner sind das Anklappen der Rückspiegel und natürlich auch die Ansteuerung eines Fahrzeughorns vorstellbar.

Es ist zweckdienlich, die Zeitdauer, in der sich das RDK-Steuergerät 12 im Nachlaufmodus N befindet, zu verlängern, sobald das RDK-Steuergerät 12 einmal in den Modus "Befüllunterstützung" eingetreten ist. Hierdurch wird einem Fahrzeugführer ausreichend Zeit gelassen, auch andere Reifen hinsichtlich des Reifendrucks p zu korrigieren. Die Verlängerung des Nachlaufmodus N soll in der Figur durch die Zeit t2' angedeutet werden.

### Bezugszeichenliste

- 10: Reifen
- 11: Messelektronik
- 12: Steuergerät für Reifendruck-Kontrolle (RDK-Steuergerät)
- 13: Gateway
- 14: Steuergerät für Fensterheber
- 14a: Fensterheber
- 15: Steuergerät für Fahrtrichtungsanzeiger
- 16: Bordnetz-Steuergerät
- 17: Fahrtrichtungsanzeiger
- 18: Außenspiegel-Fahrtrichtungsanzeiger
- 19: Steuerleitung
- 20: Steuerleitung

- CAN 1: CAN-Bus
- CAN2: CAN-Bus
- D: Datenpaket
- E: Eingangssignal
- EB: Empfangsbereitschaft (EB0=keine EB; EB1=EB)
- fBl0-5: Blinkfrequenzen
- fM0-2: Messfrequenzen der Reifen-Messelektronik
- fS1-2: Sendefrequenzen der Reifen-Messelektronik
- G: Grenzwert für die Druckänderung/Zeit
- ID-R: Reifen-Identifikation
- ID-S: Steuergeräte-Identifikation
- K: Kraftfahrzeug
- N: Nachlaufmodus
- n: Raddrehzahl
- p: Reifendruck
- Δp: Druckänderung
- pmax: max. zulässiger Reifendruck
- pmin: min. erforderlicher Reifendruck
- psoll: Soll-Reifendruck
- S1-2: Sendemodi

## Patentansprüche

1. Verfahren zur Überwachung eines Luftdrucks (p) in wenigstens einem Reifen (10) eines Kraftfahrzeugs (K), wobei durch wenigstens eine im Reifen (10) vorhandene Messelektronik (11) zumindest ein Luftdruck (p) im Reifen (10) erfasst und von der Messelektronik (11) Daten (D) an eine Steuereinheit (12) übertragen werden, wobei die Steuereinheit (12) in Abhängigkeit der Daten (D) Komponenten (14, 15) des Kraftfahrzeugs (K) zur Erzeugung von optischen (fBl) und/oder akustischen Signalen ansteuert und bei Ausstellen einer Zündung (Z=Z0) des Kraftfahrzeugs (K) für eine bestimmte Zeitdauer (t2-t1) in einen Nachlaufmodus (N) geschaltet wird, in dem die Steuereinheit (12) weiterhin Daten (D) von der Messelektronik (11) empfangen und in Abhängigkeit der Daten (D) Komponenten (14,15) des Kraftfahrzeugs (K) zur Erzeugung von optischen (fBl) und/oder akustischen Signalen ansteuern kann, wobei bei Erreichen oder Überschreiten eines Grenzwertes (G) einer im Reifen (10) in einer bestimmten Zeitspanne erfassten Druckänderung (Δp) die Messelektronik (11) einen Wechsel im Betriebsmodus durchführt und Daten (D) mit einer gegenüber einem Normalzustand (S1, fS1) erhöhten Sendefrequenz (S2, fS2) an die Steuereinheit (12) sendet und so die Steuereinheit (12) dazu veranlasst wird, in einen eine aktive Reifendruckänderung unterstützenden Unterstützungsmodus überzugehen und dafür über ein fahrzeug-eigenes Bussystem (CAN1, 13, CAN2) die zur Erzeugung von optischen (fBl) und/oder akustischen Signalen dienenden Komponenten (14, 15) anzusteuern, **dadurch gekennzeichnet, dass** von der Steuereinheit (12) im Unterstützungsmodus wenigstens ein Fahrtrichtungsanzeiger (18) angesteuert wird, derart, dass zur Signalisierung einer Aktivierung des Unterstützungsmodus der wenigstens eine Fahrtrichtungsanzeiger (18) zunächst zum Blinken in einer bestimmten Frequenz (fBl0) angesteuert wird und bei Änderung des Druckes die Blinkfrequenz (fBl) - ausgehend von einer bestimmten Frequenz (fBl1)- mit zunehmender Annäherung an einen Solldruck (psoll) in eine Richtung verändert (fbl1 nach fBl2) und mit zunehmender Entfernung von dem Solldruck (psoll) in eine andere Richtung verändert (fbl2 nach fBl4) wird, wobei bei Erreichen des Solldrucks (psoll) der wenigstens eine Fahrtrichtungsanzeiger (18) für eine bestimmte Zeitdauer als Dauerlicht (fBl3) angesteuert wird.

2. Verfahren nach Anspruch 1, **dadurch gekennzeichnet, dass** bei Über- oder Unterschreiten eines zulässigen Druckbereichs (pmin bis pmax) der wenigstens eine Fahrtrichtungsanzeiger (18) zum Blinken in einer solchen Frequenz (fBl5) angesteuert wird, die höher ist als die höchste Frequenz (fBl2) vor Erreichung des Solldrucks (psoll).

3. Verfahren nach einem der vorhergehenden Ansprüche, **dadurch gekennzeichnet, dass** der Nachlaufmodus (N) jeweils um eine bestimmte Zeitdauer (t2') verlängert wird, sobald die Steuereinheit (12) einmal in den Unterstützungsmodus übergegangen ist.

4. Verfahren nach einem der vorhergehenden Ansprüche, **dadurch gekennzeichnet, dass** die Messelektronik (11) bei Ausstellen der Zündung (Z=Z0) des Kraftfahrzeugs (K) für eine bestimmte Zeitdauer in einen solchen Betriebsmodus versetzt wird, in dem ihre Messfrequenz (fM2) gegenüber einem Normalzustand erhöht ist.

5. Verfahren nach einem der vorhergehenden Ansprüche 3 bis 6, **dadurch gekennzeichnet, dass** bei Erreichen des Solldrucks (psoll) zusätzlich ein bordeigener Summer oder wenigstens ein elektrischer Fensterheber (14a) oder eine Türschließung oder wenigstens ein Scheibenwischer oder eine Rückspiegelverstellung oder eine Sprachausgabe aktiviert wird.

6. Kraftfahrzeug (K) zur Durchführung des Verfahrens nach einem der vorhergehenden Ansprüche mit wenigstens einer in wenigstens einem Reifen (10) vorhandenen Messelektronik (11) zur Erfassung zumindest eines Luftdrucks (p) im Reifen (10) und zur Übertragung von Daten (D) der Messelektronik (11) an eine Steuereinheit (12), wobei in Abhängigkeit der Daten (D) Komponenten (14,15) des Kraftfahrzeugs (K) von der Steuereinheit (12) zur Erzeugung von optischen (fBl) und/oder akustischen Signalen ansteuerbar sind und die Steuereinheit (12) bei Ausstellen einer Zündung (Z=Z0) des Kraftfahrzeugs (K) für eine bestimmte Zeitdauer (t2-t1) in einen Nachlaufmodus (N) schaltbar ist, in dem die Steuereinheit (12) von der Messelektronik (11) weiterhin Daten (D) empfangen und in Abhängigkeit der Daten (D) Komponenten (14,15) des Kraftfahrzeugs (K) zur Erzeugung von optischen (fBl) und/oder akustischen Signalen ansteuern kann, wobei bei Erreichen oder Überschreiten eines Grenzwertes (G) einer im Reifen (10) in einer bestimmten Zeitspanne erfassten Druckänderung (Δp) die Messelektronik (11) ein Wechsel im Betriebsmodus durchführbar ist und Daten (D) mit einer gegenüber einem Normalzustand (S1, fS1) erhöhten Sendefrequenz (S2, fS2) an die Steuereinheit (12) sendbar sind und so die Steuereinheit (12) dazu veranlasst werden kann, in einen eine aktive Reifendruckänderung unterstützenden Unterstützungsmodus überzugehen und dafür über ein fahrzeug-eigenes Bussystem (CAN1, 13, CAN2) die zur Erzeugung von optischen (fBl) und/oder akustischen Signalen dienenden Komponenten (14, 15) anzusteuern, **dadurch gekennzeichnet, dass** von der Steuereinheit (12) im Unterstützungsmodus wenigstens ein Fahrtrichtungsanzeiger (18) derart ansteuerbar ist, dass zur Signalisierung einer Aktivierung des Unterstützungsmodus der wenigstens eine Fahrtrichtungsanzeiger (18) zunächst zum Blinken in einer bestimmten Frequenz (fBl0) angesteuert wird und bei Änderung des Druckes die Blinkfrequenz (fBl) - ausgehend von einer bestimmten Frequenz (fBl1)- mit zunehmender Annäherung an einen Solldruck (psoll) in eine Richtung verändert (fbl1 nach fBl2) und mit zunehmender Entfernung von dem Solldruck (psoll) in eine andere Richtung verändert (fbl2 nach fBl4) wird, wobei bei Erreichen des Solldrucks (psoll) der wenigstens eine Fahrtrichtungsanzeiger (18) für eine bestimmte Zeitdauer als Dauerlicht (fBl3) angesteuert wird..

## Claims

1. Method for monitoring an air pressure (p) in at least one tire (10) of a motor vehicle (K), wherein at least one air pressure (p) in the tire (10) is measured by means of at least one measuring electronics unit (11) present in the tire (10), and data (D) is transmitted by the measuring electronics unit (11) to a control unit (12), wherein the control unit (12) actuates components (14, 15) of the motor vehicle (K) as a function of the data (D), to generate optical signals (fBI) and/or acoustic signals, and, when an ignition (Z=Z0) of the motor vehicle (K) is shut off, is switched into a run-on mode (N) for a specific time period (t2-t1) in which the control unit (12) can continue to receive data (D) from the measuring electronics unit (11) and can actuate components (14, 15) of the motor vehicle (K) as a function of the data (D) to generate optical signals (fBI) and/or acoustic signals, wherein, when a limiting value (G) of a pressure change (Δp) detected in the tire (10) in a specific time period is reached or exceeded, the measuring electronics unit (11) implements a change in the operating mode and transmits data (D) with a transmission frequency (S2, fS2) which is increased compared to a normal state (S1, fS1) to the control unit (12) and in doing so causes the control unit (12) to go into an assistance mode which assists an active change in tire pressure, and for this purpose to actuate, by means of a vehicle-specific bus system (CAN1, 13, CAN2), the components (14, 15) which serve to generate optical signals (fBI) and/or acoustic signals, **characterized in that** at least one travel direction indicator (18) is actuated by the control unit (12) in the assistance mode in such a way that in order to signal activation of the assistance mode the at least one travel direction indicator (18) is firstly actuated to flash at a specific frequency (fBI0), and when the pressure changes the flashing frequency (fBI) is changed in one direction (fBI1 to fBI2) - starting from a specific frequency (fBI1) - as a setpoint pressure (psoll) is increasingly approached, and is changed in another direction (fBI2 to fBI4) as the distance from the setpoint pressure (psoll) increases, wherein when the setpoint pressure (psoll) is reached the at least one travel direction indicator (18) is actuated as a continuous light (fBI3) for a specific time period.

2. Method according to Claim 1, **characterized in that** when a permissible pressure range (pmin to pmax) is exceeded or undershot, the at least one travel direction indicator (18) is actuated to flash at a specific frequency (fBI5) which is higher than the highest frequency (fBI2) before the setpoint pressure (psoll) is reached.

3. Method according to either of the preceding claims, **characterized in that** the run-on mode (N) is extended in each case by a specific time period (t2') as soon as the control unit (12) has gone into the assistance mode once.

4. Method according to one of the preceding claims, **characterized in that** when the ignition (Z=Z0) of the motor vehicle (K) is shut off for a specific time period the measuring electronics unit (11) is placed in a specific operating mode in which its measuring frequency (fM2) is increased compared to a normal state.

5. Method according to one of the preceding Claims 3 to 6, **characterized in that** when the setpoint pressure (psoll) is reached, an on-board buzzer or at least one electric window lifter (14a) or a door closing system or at least one windshield wiper or one rear-view mirror adjustment system or a voice output system is additionally activated.

6. Motor vehicle (K) for carrying out the method according to one of the preceding claims having at least one measuring electronics unit (11), present in at least one tire (10), for measuring at least one air pressure (p) in the tire (10) and for transmitting data (D) of the measuring electronics unit (11) to a control unit (12), wherein components (14, 15) of the motor vehicle (K) can be actuated by the control unit (12) as a function of the data (D) to generate optical signals (fBI) and/or acoustic signals, and when an ignition (Z=Z0) of the motor vehicle (K) is shut off, the control unit (12) can be switched into a run-on mode (N) for a specific time period (t2-t1) in which the control unit (12) can continue to receive data (D) from the measuring electronics unit (11) and can actuate components (14, 15) of the motor vehicle (K) as a function of the data (D) to generate optical signals (fBI) and/or acoustic signals, wherein, when a limiting value (G) of a pressure change (Δp) detected in the tire (10) in a specific time period is reached or exceeded, the measuring electronics unit (11) a change in the operating mode can be implemented and data (D) can be transmitted with a transmission frequency (S2, fS2) which is increased compared to a normal state (S1, fS1) to the control unit (12) and in doing so the control unit (12) can be caused to go into an assistance mode which assists an active change in tire pressure, and for this purpose to actuate, by means of a vehicle-specific bus system (CAN1, 13, CAN2), the components (14, 15) which serve to generate optical signals (fBI) and/or acoustic signals, **characterized in that** at least one travel direction indicator (18) can be actuated by the control unit (12) in the assistance mode in such a way that in order to signal activation of the assistance mode the at least one travel direction indicator (18) is firstly actuated to flash at a specific frequency (fBI0), and when the pressure changes the flashing frequency (fBI) is changed in one direction (fBI1 to fBI2) - starting from a specific frequency (fBI1) - as a setpoint pressure (psoll) is increasingly approached, and is changed in another direction (fBI2 to fBI4) as the distance from the setpoint pressure (psoll) increases, wherein when the setpoint pressure (psoll) is reached the at least one travel direction indicator (18) is actuated as a continuous light (fBI3) for a specific time period.

## Revendications

1. Procédé de surveillance d'une pression d'air (p) dans au moins un pneu (10) d'un véhicule automobile (K), au moins une pression d'air (p) dans le pneu (10) étant relevée par au moins une électronique de mesure (11) présente dans le pneu (10) et des données (D) étant transmises par l'électronique de mesure (11) à une unité de commande (12), l'unité de commande (12) commandant des composants (14, 15) du véhicule automobile (K) en fonction des données (D) en vue de générer des signaux visuels (fB1) et/ou sonores et, lors de la coupure d'un allumage (Z=Z0) du véhicule automobile (K) pendant une durée (t2-t1) donnée, étant placée dans un mode de fonctionnement par inertie (N) dans lequel l'unité de commande (12) peut continuer de recevoir des données (D) de la part de l'électronique de mesure (11) et commander des composants (14, 15) du véhicule automobile (K) en fonction des données (D) en vue de générer des signaux visuels (fBl) et/ou sonores, l'électronique de mesure (11) effectuant un changement en un mode de fonctionnement lorsqu'une valeur limite (G) d'une variation de pression (Δρ) relevée dans le pneu (10) dans un intervalle de temps donné est atteinte ou dépassée, et envoyant des données (D) à l'unité de commande (12) avec une fréquence d'émission (S2, fS2) augmentée par rapport à un état normale (S1, fS1), et l'unité de commande (12) étant ainsi amenée à passer dans un mode d'assistance avec assistance active d'un changement de pression de pneu et à commander à cet effet les composants (14, 15) servant à générer des signaux visuels (fBl) et/ou sonores par le biais d'un système de bus (CAN1, 13, CAN2) propre au véhicule, **caractérisé en ce qu'**au moins un indicateur de changement de direction (18) est commandé par l'unité de commande (12) en mode d'assistance, de telle sorte que pour la signalisation d'une activation du mode d'assistance, l'au moins un indicateur de changement de direction (18) est tout d'abord commandé pour clignoter à une fréquence (fBl0) donnée puis, en cas de modification de la pression, la fréquence de clignotement (fBl) est modifiée - à partir d'une fréquence (fBl1) donnée - dans une direction (fBl1 vers fBl2) à mesure du rapprochement d'une pression de consigne (psoll) et modifiée dans une autre direction (fBl2 vers fBl4) à mesure de l'éloignement de la pression de consigne (psoll), l'au moins un indicateur de changement de direction (18) étant commandé en feu continu (fBl3) pendant une durée donnée lorsque la pression de consigne (psoll) est atteinte.

2. Procédé selon la revendication 1, **caractérisé en ce qu'**en cas de franchissement vers le haut ou le bas d'une plage de pressions admissible (pmin à pmax), l'au moins un indicateur de changement de direction (18) est commandé en clignotement à une fréquence (fBl5) qui est supérieure à la fréquence la plus élevée (fBl2) avant d'atteindre la pression de consigne (ρsoll).

3. Procédé selon l'une des revendications précédentes, **caractérisé en ce que** le mode de fonctionnement par inertie (N) est respectivement prolongé d'une durée donnée (t2') dès que l'unité de commande (12) est passée une fois dans le mode d'assistance.

4. Procédé selon l'une des revendications précédentes, **caractérisé en ce que** l'électronique de mesure (11), lors de la coupure d'un allumage (Z=Z0) du véhicule automobile (K) pendant une durée donnée, est mise dans un mode de fonctionnement dans lequel sa fréquence de mesure (fM2) est augmentée par rapport à un état normal.

5. Procédé selon l'une des revendications 3 à 6, **caractérisé en ce que** lorsque la pression de consigne (psoll) est atteinte, un vibreur sonore embarqué ou au moins un lève-vitre électrique (14a) ou une fermeture de portière ou au moins un essuie-glace ou un réglage de rétroviseur ou une diffusion vocale est activé.

6. Véhicule automobile (K) destiné à mettre en oeuvre le procédé selon l'une des revendications précédentes avec au moins une électronique de mesure (11) présente dans le pneu (10) destinée à relever au moins une pression d'air (p) dans le pneu (10) et à transmettre des données (D) de l'électronique de mesure (11) à une unité de commande (12), des composants (14, 15) du véhicule automobile (K) pouvant être commandés par l'unité de commande (12) en fonction des données (D) en vue de générer des signaux visuels (fBl) et/ou sonores et l'unité de commande (12), lors de la coupure d'un allumage (Z=Z0) du véhicule automobile (K) pendant une durée (t2-t1) donnée, pouvant être placée dans un mode de fonctionnement par inertie (N) dans lequel l'unité de commande (12) peut continuer de recevoir des données (D) de la part de l'électronique de mesure (11) et commander des composants (14, 15) du véhicule automobile (K) en fonction des données (D) en vue de générer des signaux visuels (fBl) et/ou sonores, l'électronique de mesure (11) pouvant effectuer un changement en un mode de fonctionnement lorsqu'une valeur limite (G) d'une variation de pression (Δρ) relevée dans le pneu (10) dans un intervalle de temps donné est atteinte ou dépassée, et les données (D) pouvant être envoyées à l'unité de commande (12) avec une fréquence d'émission (S2, fS2) augmentée par rapport à un état normal (S1, fS1), et l'unité de commande (12) pouvant ainsi être amenée à passer dans un mode d'assistance avec assistance active d'un changement de pression de pneu et à commander à cet effet les composants (14, 15) servant à générer des signaux visuels (fBl) et/ou sonores par le biais d'un système de bus (CAN1, 13, CAN2) propre au véhicule, **caractérisé en ce qu'**au moins un indicateur de changement de direction (18) peut être commandé par l'unité de commande (12) en mode d'assistance, de telle sorte que pour la signalisation d'une activation du mode d'assistance, l'au moins un indicateur de changement de direction (18) est tout d'abord commandé pour clignoter à une fréquence (fBl0) donnée puis, en cas de modification de la pression, la fréquence de clignotement (fBl) est modifiée - à partir d'une fréquence (fBl1) donnée - dans une direction (fBl1 vers fBl2) à mesure du rapprochement d'une pression de consigne (psoll) et modifiée dans une autre direction (fBl2 vers fBl4) à mesure de l'éloignement de la pression de consigne (psoll), l'au moins un indicateur de changement de direction (18) étant commandé en feu continu (fBl3) pendant une durée donnée lorsque la pression de consigne (psoll) est atteinte.
